# EUROPEAN PATENT APPLICATION

(11) **EP 1 854 350 A1**
(43) Date of publication of application: **14.11.2007**
(21) Application number: 06113661.0
(22) Date of filing: 09.05.2006
(51) Int. Cl.: A01K 39/012

(54) **Bird feeder**

(71) Applicant: Nossbaum, Frederik Daniel, 2271 CA Voorburg (NL)
(72) Inventor: Nossbaum, Frederik Daniël, 2271 CA, Voorburg (NL); Schouten, Eelco, 3531 EP, Utrecht (NL)
(74) Representative: Voncken, Bartholomeus Maria Ch.

(57) **Abstract**

Bird feeder, comprising a container (1) for birdseed having an open top (2) for filling birdseed and a circumferential wall (3) extending downwardly from said open top. In said circumferential wall at least one access opening (5) is provided for allowing a bird to gain access to the interior of the container. The open top can be closed by a movable cover (6). The access opening defines a hinge axis for said cover for a hinging movement between a closing position in which said open top of the container is closed and an opening position in which said open top is opened.

## Description

The invention relates to a bird feeder. Generally, a bird feeder should fulfil several demands. At one hand, supplying birdseed into the bird feeder should be easy. On the other hand, the birdseed within the bird feeder should be effectively protected against outer influences. Such a protection, however, should not make the access of birds to the birdseed within the bird feeder difficult. Although many bird feeders are known having different shapes, in general said known bird feeders are not capable of fulfilling all the above demands with a simple construction.

Thus it is an object of the present invention to provide an improved bird feeder.

In accordance with the present invention there is provided a bird feeder comprising a container for birdseed having an open top for filling birdseed and a circumferential wall extending downwardly from said open top, wherein in said circumferential wall at least one access opening is provided for allowing a bird to gain access to the interior of the container, whereas the open top can be closed by a movable cover, and wherein the access opening defines a hinge axis for said cover for a hinging movement between a closing position in which said open top of the container is closed and an opening position in which said open top is opened.

When the cover is in its opening position, the open top of the container is readily accessable for filling birdseed into the container. When such a filling has been accomplished the cover is moved towards its closing position in which it effectively closes the open top of the container, such that the birdseed within the container is protected against outer influences. However, the access opening provides an easy access for a bird to the birdseed, while at the same time defining the hinge axis for the cover. As a result, the access opening combines two functions, which reduces the number of parts needed for the bird feeder and, thus, simplifies its construction.

In a preferred embodiment of the bird feeder according to the present invention the container is provided with two diametrically opposed access openings together defining the hinge axis of the cover. Although it basically is possible to have only one access opening defining the hinge axis, the provision of two access openings together defining the hinge axis of the cover increases the stability of the cover and results in a stronger and more reliable connection between the cover and the container.

The cooperation between the cover and access openings may be realised in such a manner, that the cover is provided with two sleeves extending through the access openings with a fit allowing a rotation of said sleeves relative to the access openings.

It should be noted, that it is also possible to provide the container, and not the cover, with such sleeves which then would extend through holes in the cover in a corresponding manner.

Further, preferably the cover comprises an upper cover part for closing the open top of the container, and two diametrically opposed legs extending downwardly from said upper cover part and carrying said sleeves. In such a case preferably at least the legs of the cover are manufactured of a resilient material. This allows an easy assembly and disassembly of the cover and container.

When such legs are provided, it is possible that at least one leg near to the respective sleeve is provided with a bird support, such as for example a projecting pin. As a result a bird can sit next to the access opening.

In yet another preferred embodiment of the feeder according to the present invention the cover and container are provided with cooperating means for defining the closing position of the cover. In most cases the position of the access openings will be close to the bottom of the container. This means that the center of gravity of the combination of container and birdseed contained therein is likely to be above the hinge axis (which is defined by the access openings). Because, moreover, the bird feeder often will be suspended by means of its cover (for example an eyelet provided on top of the upper cover part), such an elevated center of gravity of the container could lead to an undesired tilting thereof. The cooperating means are helpful in preventing such a tilting motion.

By way of exemplary embodiment, said cooperating means may comprise snap members, such as for example projecting members on one of said cover and container and recesses on the other of said cover and container.

Hereinafter the invention will be elucidated while referring to the drawing in which
Figure 1 shows an embodiment of a bird feeder according to the present invention in a perspective view;
Figure 2 shows, on a reduced scale, a cross section according to II-II in figure 1, and
Figure 3 illustrates the movement of the cover relative to the container in three stages.

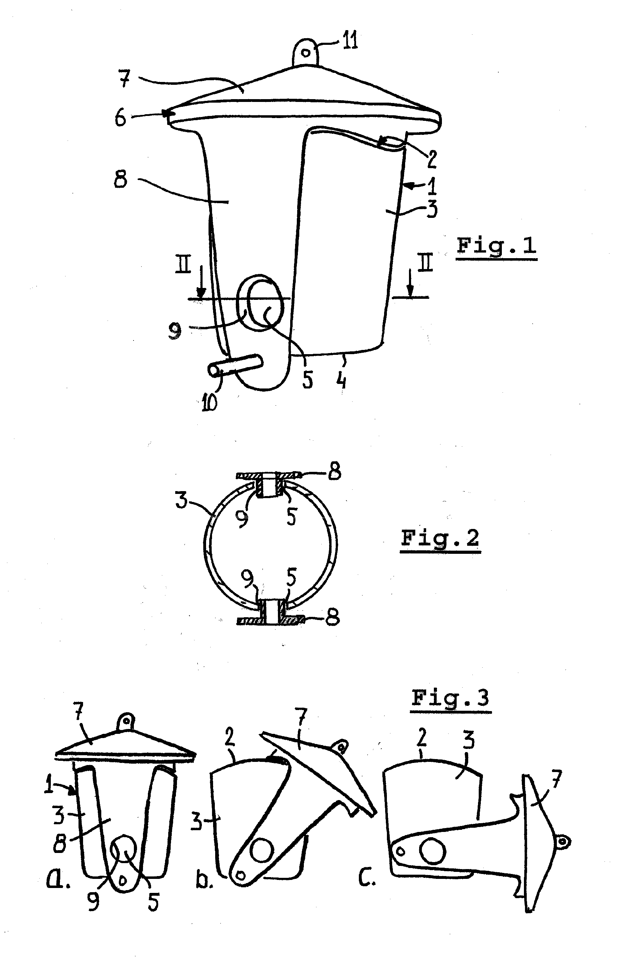

Firstly referring to figure 1, a bird feeder is illustrated in a perspective view. The bird feeder comprises a container 1 for birdseed. Although shown here having a bucket shape, such a container 1 also could have other shapes.

The container has an open top 2 for filling birdseed. A circumferential wall 3 extends downwardly from said open top 2 towards a bottom 4 of the container 1. In said circumferential wall 3 two diametrically opposed access openings 5 are provided (only one is visible in figure 1; both are represented, however, in figure 2) for allowing a bird to gain access to the interior of the container 3 and the birdseed present there.

The open top 2 of the container can be closed by a movable cover 6. The cover comprises an upper cover part 7 for closing the open top of the container, and two diametrically opposed legs 8 (only one of which is visible in figure 1; both are visible in figure 2). Said legs 8 extend downwardly from said upper cover part 7 and carry sleeves 9 extending (as best seen in figure 2) through the access openings 5 of the container 1 with a fit allowing a rotation of said sleeves relative to the access openings. As a result the access openings 5 together with the sleeves 9 define a hinge axis for the cover 6 for a hinging movement between a closing position in which said open top 2 of the container is closed and an opening position in which said open top is opened.

Such a hinging movement of the cover 6 relative to the container 1 is illustrated in figure 3. Figure 3a shows a position in which the upper cover part 7 closes or covers the open top 2 of the container 1 and thus protects the contents of the container. In the figure 3b situation the cover has hinged to a position partly freeing the open top 2, whereas in figure 3c the cover is shown in a yet further hinged position. In this position the open top 2 is fully opened, thus allowing an easy supply of birdseed into the container 1.

The legs 8 of the cover 6 are manufactured of a resilient material, such that mounting the sleeves 9 into the access openings 5 or removing them therefrom can be achieved in a simple and quick manner.

As shown, at least one leg 8 near to the respective sleeve 9 (and, thus, near to the access opening 5) is provided with a bird support 10, such as for example a projecting pin.

For maintaining the cover 6 and container 1 in a closed position, the cover and container are provided with cooperating means for defining the closing position of the cover. For example said cooperating means comprise snap members, such as for example projecting members on one of said cover and container and recesses on the other of said cover and container (not illustrated in detail).

The upper cover part 7 is provided with an eyelet 11 with which the bird feeder can be suspended.

The inner ends of the sleeves 9 may be provided with protection means known per se (or may be shaped) for preventing an undesired outflow of birdseed through the access openings 5.

The invention is not limited to the embodiments described above, which may be varied widely within the scope of the invention as defined by the appending claims.

## Claims

1. Bird feeder, comprising a container for birdseed having an open top for filling birdseed and a circumferential wall extending downwardly from said open top, wherein in said circumferential wall at least one access opening is provided for allowing a bird to gain access to the interior of the container, whereas the open top can be closed by a movable cover, and wherein the access opening defines a hinge axis for said cover for a hinging movement between a closing position in which said open top of the container is closed and an opening position in which said open top is opened.

2. Bird feeder according to claim 1, wherein the container is provided with two diametrically opposed access openings together defining the hinge axis of the cover.

3. Bird feeder according to claim 2, wherein the cover is provided with two sleeves extending through the access openings with a fit allowing a rotation of said sleeves relative to the access openings.

4. Bird feeder according to claim 3, wherein the cover comprises an upper cover part for closing the open top of the container, and two diametrically opposed legs extending downwardly from said upper cover part and carrying said sleeves.

5. Bird feeder according to claim 4, wherein at least the legs of the cover are manufactured of a resilient material.

6. Bird feeder according to claim 4 or 5, wherein at least one leg near to the respective sleeve is provided with a bird support, such as for example a projecting pin.

7. Bird feeder according to any of the previous claims, wherein the cover and container are provided with cooperating means for defining the closing position of the cover.

8. Bird feeder according to claim 7, wherein said cooperating means comprise snap members, such as for example projecting members on one of said cover and container and recesses on the other of said cover and container.
